# EUROPEAN PATENT APPLICATION

(11) **EP 3 517 978 A1**
(43) Date of publication of application: **31.07.2019**
(21) Application number: 18382037.2
(22) Date of filing: 24.01.2018
(51) Int. Cl.: G01P 5/26, G01S 17/58

(54) **METHOD AND DEVICE FOR CONFOCAL MEASUREMENT OF DISPLACEMENT, VELOCITY OR FLOW AT A POINT OF A SAMPLE AND USES THEREOF**

(71) Applicant: Universitat Politècnica De Catalunya, 08034 Barcelona (ES)
(72) Inventor: ROYO ROYO, Santiago, 08755 Castellbisbal (ES); YÁÑEZ, Carlos, 08221 Terrassa (ES)
(74) Representative: Juncosa Miró, Jaime

(57) **Abstract**

The invention relates to a method and device for the confocal measurement of the displacement, velocity or flow at a given point of a sample and uses thereof. Said method comprises a first source (11) illuminating a sample (1), making it visible to acquisition means (12); a second source (13) emitting a second light beam; a diaphragm (15) modifying said second light beam, providing a beam with a circular approximation which is redirected to a microscope objective (16); the acquisition means (12) capturing a first part of the signal reflected by the sample (1) and the second source (13) receiving a second part of the signal reflected by the sample (1); and a computer system (18) measuring the displacement, velocity or flow on a vertical, horizontal or arbitrary plane of the sample (1) using said second part, wherein the spatial resolution of the measurement is adjusted by modifying the diameter of the diaphragm (15) and a numerical aperture of the microscope objective (16), depending on the sample (1) to be measured.

## Description

### Technical Field

Present invention, in general, relates to optical measurement methods and devices. In particular, the invention relates to a method and device for the real-time confocal measurement of the displacement, velocity or flow on a vertical plane (i.e., perpendicular to or outside the plane of focus of the objective), horizontal plane (i.e., contained in the plane of focus of the objective); or arbitrary plane (i.e., oriented in any direction) of a sample, for example a millimetric or micrometric sample. For example, the proposed device can be used to simultaneously measure the vertical and/or horizontal displacements of the sample, or to take measurements of the maximum velocity of a flow within a capillary in the vertical, horizontal or arbitrary direction, or of the velocity profile of a flow within a capillary, or of the velocity of displacement of the sample in the vertical and/or horizontal planes, etc.

### Background of the Invention

An apparatus for measuring the speed of blood in blood vessels in biological samples, for example, in retinal blood vessels, is known through patent document EP-B1-0707823. The mentioned apparatus comprises a light source having a principal wavelength, which radiation is substantially spatially coherent and has a temporal coherence length less than 1 picosecond; a beam splitter for splitting the beam into a sample beam and reference beam; an optical apparatus for directing the sample beam to an area within the biological sample; a reflector for reflecting the reference beam; a detector for detecting an interference between the sample beam reflected from the area and the reflected reference beam and for generating an interference signal; an apparatus for altering an optical path length of the reference beam from the beam splitter to the detector at an alteration velocity; and an analyzer for analyzing the interference signal to determine the speed of blood in the area from a shift of a central frequency of a frequency spectrum of the interference signal from a frequency determined from the alteration velocity and principal wavelength. Unlike the present invention, the mentioned apparatus does not include two light-emitting sources, one white light-emitting source that acts like a real-time viewfinder, such that it allows selecting the measuring point with precision, and such that it is furthermore used for recording static or video images of the sample(s) to be measured/analyzed; and another single-mode or multimode laser light source, or even a high-coherence LED, based on the measurement principle of Optical Feedback Interferometry (OFI), also called Self-Mixing Interferometry (SMI) or Laser Feedback Interferometry (LFI), for measuring changes in the optical path with a certain resolution and then inferring with it the displacement of the sample(s) to be measured/analyzed whether this is done on a vertical plane (vibrometry) or on a horizontal plane (flowmetry or velocity) of the sample, or a combination of both, which includes any plane of arbitrary orientation.

An adaptive optics scanning system is known through patent document US-B2-9200887, said system comprising a beam projection module with four or more axes of motion that can project and control the position and angle of a light beam to or from an adaptive optics element. The adaptive optics scanning system is compact in size, overcoming the challenges of a traditional lens and mirror pupil relay design. The adaptive optics scanning system has little to no dispersion, chromatic aberration, and off-axis aberration for improved optical performance. Unlike the present invention, the mentioned scanning system does not include two light-emitting sources performing the same functions as in the present invention either.

In light of the foregoing, there is a need in the art for new methods and devices that allow taking a confocal measurement and performing confocal characterization of the displacement, velocity or flow in millimetric or micrometric samples (or particles).

### Brief Description of the Invention

For that purpose, the embodiments of the present invention provide, according to a first aspect, a method for the confocal measurement of the displacement, velocity or flow of a given point of a sample. The mentioned confocal measurement can be taken on a vertical, horizontal and/or arbitrary plane of the sample.

To that end, the method comprises emitting, by a first white light-emitting source, a first light beam at a certain power to illuminate the mentioned sample (for example, a micrometric or millimetric sample) and make it visible to acquisition means, for example a camera, wherein the sample is positioned on a supporting structure; emitting, by a second light-emitting source, a second coherent or quasi-coherent light beam at a certain wavelength which is collimated by a collimating lens; modifying, by a diaphragm, of a certain diameter, positioned in front of the collimating lens, the mentioned second light beam providing a beam with a circular approximation; redirecting, by an optical unit, such as a polarized or non-polarized beam splitter, or a dichroic mirror, the beam with a circular approximation to a microscope objective, the beam with a circular approximation being guided over the sample, wherein said microscope objective has a certain numerical aperture; capturing, by the acquisition means, a first part of the signal reflected by said sample and receiving, by the second light-emitting source, a second part of the signal reflected by the sample; and measuring, by a computer system, the displacement, velocity or flow on said plane of the sample using the second part of the signal reflected by the sample.

According to the proposed method, the spatial resolution of the measurement is adjusted by modifying the diameter of the diaphragm and the numerical aperture of the microscope objective, as a function of the sample to be measured.

In one embodiment, the method further comprises adjusting by means of displacement, via a control unit included or integrated in, or in the area close to, the supporting structure, the measuring point by displacing the sample on the vertical or horizontal plane in at least a certain direction, taking advantage of the capacity of locating the suitable point of the sample by means of the combination of the two light sources and of the acquisition means for taking the desired measurement. Likewise, and by means of taking successive or parallel measurements of said displacement, the computer system further allows generating two-dimensional or three-dimensional images of the sample, storing the measurements taken and the position of such measurements in the sample in a recording/storage means arranged for such purpose.

In one embodiment, the method further comprises implementing, preferably via the computer system, a digital processing on the displacement, velocity or flow measurement.

In one embodiment, the emission of the first light beam is performed continuously and the emission of the second light beam is performed at different configurable moments in time. Alternatively, in another embodiment, the emissions of the two light beams are performed simultaneously.

In one embodiment, the emission of the first light beam is used to select an optimal measuring point in which the measurement corresponding to the second light beam is taken.

Preferably, the second light-emitting source is a single-mode, monochromatic and coherent laser light source. Nevertheless, according to the present invention, a multimode laser light source, or even a high-coherence LED, could also be used as a second light-emitting source.

Other embodiments of the invention that are described herein also include a device for the confocal measurement of the displacement, velocity or flow at a given point of a sample, wherein the confocal measurement can be taken on a vertical, horizontal and/or arbitrary plane of the sample. The proposed device is preferably formed by:
- a supporting structure configured for housing the sample the displacement, velocity or flow of which are to be measured and characterized;
- a first white light-emitting source configured to emit a first coherent or quasi-coherent light beam at a certain power to illuminate a sample and make said sample visible to acquisition means;
- a second light-emitting source configured to emit a second light beam at a certain wavelength which is collimated by a collimating lens;
- a diaphragm, of a certain diameter, positioned in front of the collimating lens and configured to modify the second light beam, providing a beam with a circular approximation which is redirected to a microscope objective through an optical unit, wherein said microscope objective has a certain numerical aperture; and
- the acquisition means further configured to capture a first part of the signal reflected by the sample.

According to the device proposed by the present invention, the second part of the signal reflected by the sample is received in the second light-emitting source, such that it is used by a computer system operatively connected to the second light-emitting source to measure the displacement, velocity or flow on the mentioned plane(s) of the sample. Likewise, the spatial resolution of the measurement is adjusted by modifying the diameter of the diaphragm and the numerical aperture of the microscope objective, as a function of the sample to be measured.

The sample to be measured, or its characteristics of interest in the measurement, can typically be of micrometric or millimetric dimensions.

In one embodiment, the proposed device further includes a control unit, included or integrated in the supporting structure, and configured to automatically adjust the measuring point by displacing the sample in one or more directions (x, y, and/or z).

The wavelength of the second light-emitting source can be variable and belong to any band in the spectrum, depending on the characteristics or needs that are required (medical interval, type of tissue, etc.). Nevertheless, in a particular embodiment of the present invention, the mentioned wavelength at which the second light beam is emitted is comprised in a range of 800 to 900 nanometers.

Other embodiments of the invention also include different uses of the method of the first aspect of the invention for: taking a real-time measurement of the maximum velocity of a flow within an artificial or biological capillary; reconstructing a velocity profile of a flow within an artificial or biological capillary; performing real-time vertical sectioning of a flow with micrometric resolution; taking a viscosity measurement at different depths in a homogeneous or heterogeneous liquid; taking an amplitude and frequency measurement of a micrometric sample under vibration; measuring the velocity of solid or gas flows; and/or performing reconstruction of a vertical displacement pattern of different micrometric samples for the identification and/or classification thereof.

Therefore, the present invention combines two known functions for performing a new type of displacement, velocity or flow measurement in micrometric or millimetric particles. On one hand, it presents a white light microscope working like a real-time viewfinder, which allows selecting the measuring point and that is further (optionally) used for recording static or video images of the sample(s) to be measured. On the other hand, it presents a laser interferometer based feedback interferometry (OFI or SMI), capable of measuring changes in the optical path with a resolution less than the wavelength of the laser light, typically λ/2 and λ/50 and then inferring with it the displacement of the sample(s) to be measured. Besides, in a different contribution made by the present invention, a confocal function is added to the measuring part (by means of the mentioned diaphragm) which had not previously been present in similar devices.

### Brief Description of the Drawings

The foregoing and other features and advantages will be more fully understood based on the following detailed description of several merely illustrative and non-limiting embodiments in reference to the attached drawings, in which:
Fig. 1 schematically illustrates a diagram of the proposed device.
Fig. 2 schematically illustrates an enlargement of the second arm of the proposed device.
Fig. 3 is a flow chart showing a method for the confocal measurement of the displacement, velocity or flow of a given point of a sample on a vertical, horizontal and/or arbitrary plane of the sample according to an embodiment of the present invention.

### Detailed Description of Several Embodiments

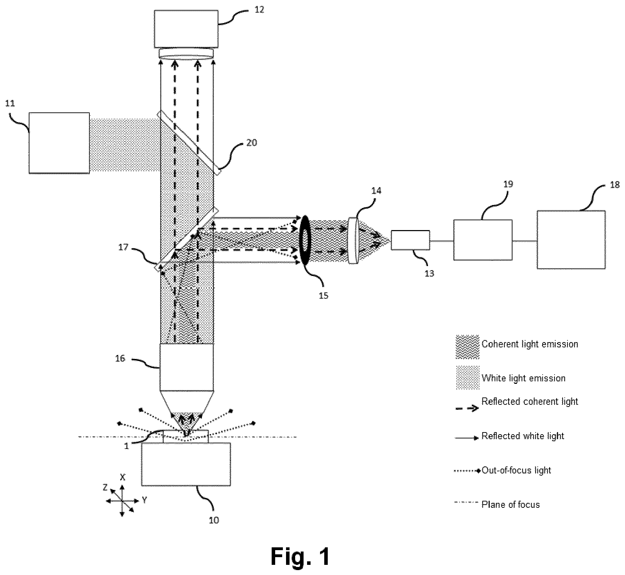

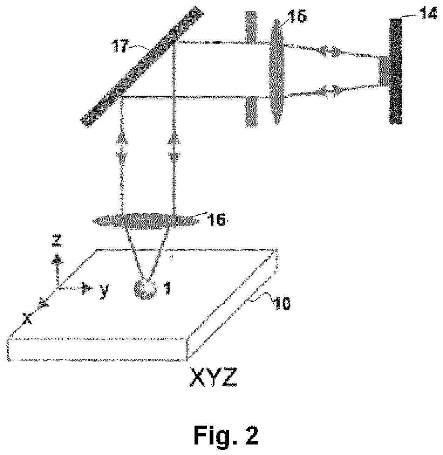

Figs. 1 and 2 show an embodiment of the proposed device for the confocal measurement of the displacement, velocity or flow of a sample on a vertical, horizontal or arbitrarily oriented plane. According to this embodiment, the device includes a supporting structure 10, such as a three-dimensional base, for housing the sample 1 to be measured/analyzed. Likewise, as can be seen in the figure, the device has two light sources, a first white light-emitting source 11 providing the radiation required to illuminate the sample 1 and make it visible to acquisition means 12, such as a camera or a similar device, and a second light-emitting source 13, in this case a single-mode, monochromatic and coherent light-emitting source, which emits, for example, at 830 nanometers a second divergent light beam which is collimated by a collimating lens 14 (the optical path of this second source is depicted in Fig. 1 in a lighter color than the beam going to the sample 1 is, and in a darker color than the portion of the beam that will go through a diaphragm 15 and return to the second light-emitting source 13 is). As it comes from a source that emits a non-Gaussian beam with two different divergence angles, the collimated beam has an elliptical shape with an astigmatism effect, where said effect may not be produced depending on the type of light source used.

It should be noted that the second light-emitting source 13, in other embodiments, may not be a single-mode, coherent light source, but rather it may be a multimode laser or even a LED. Likewise, a group of lasers or a group of LEDs could also be used. Likewise, the wavelength of this second light-emitting source 13 is variable, where it could cover any range of the spectrum, depending on the characteristics or needs of the sample 1 to be measured/analyzed.

Next, the cited diaphragm 15 (or pinhole), of a certain diameter, depending on the characteristics of the measurement, receives the second light beam and an approximately circular beam is obtained at its outlet, which approximately circular beam is then partially redirected by an optical unit 17, in this case a beam splitter, over the entrance pupil of a microscope objective 16. The size of the point of focus at the outlet of the microscope objective 16 is determined by the numerical aperture thereof and the diameter of the diaphragm 15. Said size of the point of focus will be a critical parameter for defining the measurement volume of the proposed device, and will therefore determine the spatial resolution of the measurements. Therefore, the resolution of the device can be adjusted, depending on the need of the user, as a function of the size of the sample 1 to be measured.

Once the beam is focused on the sample 1, the measuring point can be adjusted by means of the mentioned supporting structure 10 displacing the sample 1 in direction *x, y,* and/or z. To that end, the supporting structure 10 integrates a control unit, or is operatively connected to a control unit, for example via a cable or wirelessly.

When the beam interacts with the sample 1 (which can be displaced in any point in space) a part of the incident monochromatic radiation returns to the cavity of the second light-emitting source 13, where the interference including the information relating to the displacement and/or to the flowmetry or velocity of the sample originates. In the case of displacement measurements, the number of displacement bands appearing in the signal will be considered. In the case of flowmetry and/or velocity measurements, the information relating to the change in Doppler frequency caused by the motion of the sample 1 will be considered. Likewise, the returning radiation experiences a phase change due to the distance at which the sample 1 is located at the time of the interaction. By means of the interference between the original radiation emitted and the returning radiation with changes due to sample 1 the velocity, frequency and amplitude of the motion of the sample 1 in the vertical, horizontal or arbitrary directions can be induced. Due to the scattering of the second beam within the sample 1, part of the light returning to the cavity comes from an undesired region within the near and far fields, inducing the out-of-focus effect which must sometimes be corrected with an additional digital processing 19 to obtain a clear measurement of the desired phenomenon. In this case, in the optical return path to the cavity of the second light-emitting source 13, the diaphragm 15 serves as a spatial filter to limit light coming from out-of-focus regions reaching the cavity and inducing noise in the measurement due to light returned from outside the measurement volume.

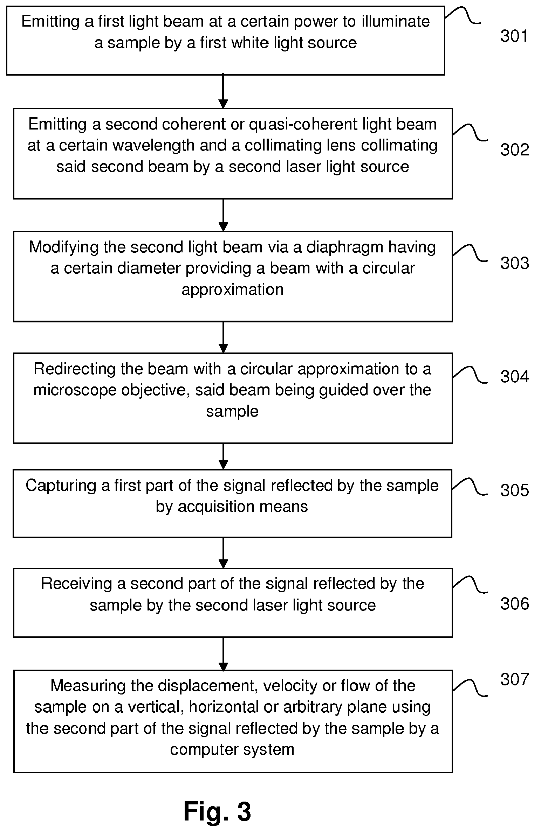

Now in reference to Fig. 3, therein it is shown an embodiment of the proposed method. According to this embodiment, a first white light source 11, step 301, emits a first light beam at a certain power to illuminate a sample 1 (positioned on a supporting structure 10). Next, or at the same time, a second light source 13, in this case a laser, step 302, emits a second light beam at a certain wavelength which is collimated by a collimating lens 14. Then, step 303, a diaphragm 15 of a certain diameter modifies the second light beam, providing a beam with a circular approximation, which is redirected (step 304) to a microscope objective 16 of a certain numerical aperture, said beam being guided over the sample 1. A first part of the signal reflected by the sample 1 is captured by acquisition means 12 (step 305), whereas a second part of the signal reflected by the sample 1 is received by the second laser light source 13 (step 306). Finally, the mentioned second part is used, by a computer system 18, such as a computer, among other similar devices, which is operatively connected to the second laser light source 13, to measure the displacement, velocity or flow on the vertical or horizontal planes or on an arbitrary plane of the sample 1.

The spatial resolution of the mentioned measurement can be adjusted as a function of the needs and characteristics of the sample 1 by modifying the mentioned diameter of the diaphragm 15 and the numerical aperture of the microscope objective 16.

In one embodiment, the computer system 18 further generates, by means of successive or parallel measurements, two-dimensional or three-dimensional images of the displacement, velocity or flow measured by means of a scan of the sample 1.

The possible potential applications or uses of the present invention include, among others: taking real-time measurement of the maximum velocity of a flow within a (artificial or biological) capillary, reconstructing the velocity profile of a flow within a (artificial or biological) capillary, performing real-time vertical sectioning of a flow with micrometric resolution, taking a viscosity measurement at different depths in a homogeneous or heterogeneous liquid, taking an amplitude and frequency measurement of a micrometric particle under vibration, or reconstructing the vertical displacement pattern of different micrometric particles for the identification and/or classification thereof, among other functions. In all these cases, the first white light source 11 can be used as means to select the optimal measuring point, or the measuring point of greatest interest, in each case.

The scope of the present invention is defined in the attached claims.

## Claims

1. A method for the confocal measurement of the displacement, velocity or flow at a given point of a sample, wherein said confocal measurement is performed on a vertical, horizontal or arbitrary plane of said sample, **characterized in that** the method comprises:
emitting, by a first white light-emitting source (11), a first light beam at a certain power to illuminate a sample (1) and make said sample (1) visible to acquisition means (12), wherein the sample (1) is positioned on a supporting structure (10);
emitting, by a second light-emitting source (13), a second coherent or quasi-coherent light beam at a certain wavelength which is collimated by a collimating lens (14);
modifying, by a diaphragm (15), of a certain diameter, positioned in front of the collimating lens (14), said second light beam, providing a beam with a circular approximation;
redirecting, by an optical unit (17), said beam with a circular approximation to a microscope objective (16), said beam with a circular approximation being guided over the sample (1), wherein said microscope objective (16) has a certain numerical aperture;
capturing, by said acquisition means (12), a first part of the signal reflected by said sample (1) and receiving, by said second light-emitting source (13), a second part of the signal reflected by said sample (1); and
measuring, by a computer system (18), the displacement, velocity or flow on said plane of the sample (1) using said second part of the signal reflected by the sample (1) received in the second light-emitting source (13),
wherein the spatial resolution of the measurement is adjusted by modifying the diameter of the diaphragm (15) and the numerical aperture of the microscope objective (16), as a function of the sample (1) to be measured.

2. The method according to claim 1, further comprising adjusting, by a control unit of the supporting structure (10), the measuring point by displacing the sample (1) in at least a certain direction based on information provided by the device.

3. The method according to previous claims, further comprising generating, by the computer system (18), by means of successive or parallel measurements, two-dimensional or three-dimensional images of said displacement, velocity or flow measured by means of a scan of the sample (1).

4. The method according to claim 1, further comprising applying a digital processing to said displacement, velocity or flow measurement.

5. The method according to claim 1, wherein said emission of the first light beam is continuous and the emission of the second light beam is performed at different configurable moments in time.

6. The method according to claim 1, wherein the emission of the first light beam and the emission of the second light beam are performed simultaneously.

7. The method according to claim 1, wherein the emission of the first light beam is used to select an optimal measuring point in which the measurement corresponding to the second light beam is taken.

8. The method according to claim 1, wherein the second light-emitting source (13) comprises a single-mode, monochromatic and coherent laser light source, a multimode laser light source or a high-coherence light-emitting diode, LED.

9. A device for the confocal measurement of the displacement, velocity or flow at a given point of a sample, wherein the confocal measurement is taken on a vertical, horizontal or arbitrary plane of said sample, the device being **characterized in that** it comprises:
a supporting structure (10) configured to house a sample (1) the displacement, velocity or flow of which are to be measured and characterized;
a first white light-emitting source (11) configured to emit a first light beam at a certain power to illuminate said sample (1) and make it visible to acquisition means (12);
a second light-emitting source (13) configured to emit a second coherent or quasi-coherent light beam at a certain wavelength which is collimated by a collimating lens (14); and
a diaphragm (15), of a certain diameter, positioned in front of the collimating lens (14) and configured to modify said second light beam providing a beam with a circular approximation which is redirected to a microscope objective (16) through an optical unit (17), wherein said microscope objective (16) has a certain numerical aperture,
wherein said acquisition means (12) are further configured to capture a first part of the signal reflected by the sample (1),
wherein a second part of the signal reflected by the sample (1) is received in the second light-emitting source (13), such that it is used by a computer system (18) operatively connected to the second light-emitting source to measure the displacement, velocity or flow on said plane of the sample (1), and
wherein the spatial resolution of the measurement is adjusted by modifying the diameter of the diaphragm (15) and the numerical aperture of the microscope objective (16), as a function of the sample (1) to be measured.

10. The device according to claim 9, wherein said device further comprises a control unit included in said supporting structure (10) configured to automatically adjust the measuring point by displacing the sample (1) in at least a certain direction based on information provided by the device.

11. The device according to claim 9, wherein the second light-emitting source (13) comprises a single-mode, monochromatic and coherent light source, a multimode laser light source or a high-coherence light-emitting diode, LED.

12. The device according to claim 9 or 11, wherein said wavelength at which the second light beam is emitted is comprised in a range between 800 and 900 nanometers.

13. The device according to previous claims 8 to 11, wherein the sample (1) comprises a micrometric or millimetric sample.

14. Use of the method of claim 1 for: taking a real-time measurement of the maximum velocity of a flow within an artificial or biological capillary; reconstructing a velocity profile of a flow within an artificial or biological capillary; performing real-time vertical sectioning of a flow with micrometric resolution; taking a viscosity measurement at different depths in a homogeneous or heterogeneous liquid; taking an amplitude and frequency measurement of a micrometric sample under vibration; and/or performing reconstruction of a vertical displacement pattern of different micrometric samples for the identification and/or classification thereof.
